# EUROPEAN PATENT SPECIFICATION

(11) **EP 3 381 772 B1**
(45) Date of publication and mention of the grant of the patent: **21.10.2020**
(21) Application number: 17162969.4
(22) Date of filing: 27.03.2017
(51) Int. Cl.: B62D 33/037

(54) **SIDE WALL FOR A CARGO AREA WITH IMPROVED LATCHING OR LOCKING MECHANISM**
SEITENWAND FÜR EINE LADEFLÄCHE MIT VERBESSERTER VERRIEGELUNG ODER VERBESSERTEM VERRIEGELUNGSMECHANISMUS
PAROI LATÉRALE POUR UNE ZONE DE CHARGEMENT AYANT UN MÉCANISME DE VERROUILLAGE OU DE BLOCAGE AMÉLIORÉ

(43) Date of publication of application: 03.10.2018
(73) Proprietor: Ford Global Technologies, LLC, Dearborn, MI 48126 (US)
(72) Inventor: Mavi, Burcu Zehra, Sancaktepe / Istanbul (TR); Çiçek, Orhan, Kadiköy / Istanbul (TR); Aksoy, Kadir Oray, Pendik/ISTANBUL (TR); Yegin, Burak, Izmit / Kocaeli (TR)
(74) Representative: Illing, Rolf

(56) References cited:
- DE-A1- 19 505 534
- DE-U1- 20 209 018
- FR-A- 1 284 255
- US-A- 5 556 152

## Description

The present invention relates in general to side walls for a cargo area of a vehicle such as the side walls of the cargo area of a pickup truck or trailer, with a latching mechanism. The present invention also relates to a vehicle or trailer comprising a cargo area with at least one such side wall.

Vehicles or trailers with a rectangular cargo area are known in the art. Such a cargo area is typically defined by a floor or bottom, a front panel which is fixed, two opposite side walls, pivotally mounted about respective horizontal axes, and a tailgate at the back. The side walls can typically move between a closed position, in which the side walls are typically oriented vertically upwards, and an open position, which can be a horizontal position or a vertically downwards position.

During transport, the side walls and the tailgate are typically kept in their closed position by means of various latching mechanisms.

FR 1 284 255 A discloses a side wall according to the preamble of claim 1. CN 201325360 Y discloses an automatic locking device for a tipper backdoor.

US 6,276,738 B1 discloses a retractable tailgate assembly for use with a vehicle cargo bed including a floor, a front wall panel connecting a pair of side wall panels, and including a pivoting tailgate defining ends pivotally engaging said pair of side wall panels and means for releasable holding said tailgate in position.

US 2010/0109369 A1 discloses a lift gate assist mechanism for assisting the raising and lowering of a lift gate attached to a trailer.

US 6,890,013 B2 discloses a power assisted cargo area extender that consists of a top panel, a bottom panel, and two side panels.

US 5,954,383 A discloses a tailgate lift kit.

US 6,048,018 A disclose a convertible cargo box for transporting cargo on a vehicle with first and second opposite side walls pivotably mounted about generally horizontal axes located adjacent the floor. The first and second side walls are each pivotable between a closed position generally perpendicular to the floor and an open position generally parallel to and aligned with the floor to form an extension thereof.

EP 1 422 127 A1 discloses a board for vehicles having a bottom wall and four sides.

US 2016/0023692 A1 discloses a cargo bed having a succession of swinging side panels whose top margins self-align when staked in upright positions.

US 6,217,097 B1 discloses a power-operated tailgate having a bottom end that is pivotally attached to a vehicle by a hinge so that the tailgate pivots about a hinge axis between a raised position and a lowered position.

CN 201512009 U describes a side baffle plate of a truck wagon box provided with a heightened sideboard.

While various mechanisms are used for locking the side walls, each having its specific advantages and disadvantages, there is still room for improvement.

The present invention has the object to provide a side wall for a cargo area of a vehicle, with an improved latching or locking mechanism. The present invention also relates to a vehicle or trailer comprising a cargo area with at least one such side wall.

It is a particular object of the present invention to provide such a side wall and a vehicle or trailer comprising such a side wall that solves the problem of having to walk around the entire cargo space in order to open the side walls.

These objects are achieved by a side wall having the features of claim 1 and by a vehicle or trailer having the features of claim 9 and claim 10, respectively. Further, particularly advantageous embodiments of the present invention are disclosed in the dependent claims.

It should be noted that the individual features listed in the description below can be combined in any technically meaningful way with each other and show further embodiments of the invention. The description of the invention is additionally characterized and specified particularly in connection with the figures.

The present invention discloses a side wall for a cargo area of a vehicle, the side wall comprising a latch mechanism comprising: a rear latch mechanism comprising: a single handle rotatable about an axis, the handle comprising a rear latch configured for engaging with rear engagement means; the handle being located at the rear end of the side wall; a front latch mechanism comprising: a front latch movable in a longitudinal direction of the side wall and configured for engaging with front engagement means; a pulley system comprising: a pulley fixedly mounted to the handle; and a spring arranged for biasing the front latch outwardly with respect to the side wall; and a cable interconnecting the pulley and the front latch; wherein the latch mechanism is adapted for engaging and disengaging both the front latch and the rear latch upon rotation of the handle.

It is an advantage of this side wall that it does not require two or more individual latch systems, each provided with a rotatable handle, which is beneficial in terms of complexity, component cost and assembly cost.

It is an advantage for the user that the side wall can be opened or closed by merely rotating a single handle, rather than two or more handles which moreover are located at extreme ends of the cargo area. This is much more convenient.

According to a further advantageous embodiment of the present invention, the side wall further comprises a tubular housing arranged for surrounding at least a portion of the cable.

It is an advantage that the tubular housing provides protection to the cable. Preferably at least 70 % of the length of the cable is surrounded by this tubular housing.

According to a further advantageous embodiment of the present invention, the rear latch is a latch pin and the rear engagement means is a rear strike plate fixed to a rear panel or a tailgate or a rear post.

The rear strike plate is not part of the side wall itself, but is part of the rear post or part of the tailgate or the like.

According to a further advantageous embodiment of the present invention, the front engagement means is a front strike plate fixed to a front panel or a front post.

The front strike plate is not part of the side wall itself, but is part of the front panel or front post or the like.

According to a further advantageous embodiment of the present invention, the front latch is a spring latch comprising a straight side and a bevelled side.

Such a shape is well known from doors and offers the advantage that the side wall can be easily closed by simply pushing the side wall towards its vertical position without requiring moving the handle.

According to a further advantageous embodiment of the present invention, the spring is a compression spring.

According to a further advantageous embodiment of the present invention, the cable is a steel cable.

According to a further advantageous embodiment of the present invention, the handle is located on an outside of the cargo area.

It is an advantage of locating the handle on the outside of the cargo area rather than on the inside, because this provides easier access to the handle.

In another advantageous embodiment, the present invention discloses a vehicle comprising: a cargo area with at least one or at least two side walls specified above; and a front panel or front post comprising said front engagement means, e.g. a front strike plate.

In another advantageous embodiment, the present invention discloses a trailer comprising a cargo area with at least one or at least two side walls specified above.
FIG. 1 shows a partially broken away side view of a portion of a vehicle comprising a cargo area having a side wall known in the art. The side wall has a separate front latch mechanism with a front handle and a rear latch mechanism with a rear handle, both handles are located on the inside of the cargo area (i.e. facing the interior of the cargo area). Further features and advantages of the present invention will become apparent from the following description of non-limiting embodiments of the invention which will be explained below with reference to the drawings.
FIG. 2 shows an outside view of a side wall according to an embodiment of the present invention having only a single handle located at the rear end of the side wall and preferably located on the outside of the cargo area (i.e. facing away from the cargo area). As can be seen, there is no second handle at the front end of the side wall,
FIG. 3 shows a semi-transparent view of the side wall according to an embodiment of the present invention. The side wall has a latching mechanism with a single handle for controlling both the rear latch mechanism and the front latch mechanism.
FIG. 4 is a schematic view on the rear latch mechanism and also shows a pulley and a rear end of a cable (as part of the pulley system). The cable extends in longitudinal direction of the side wall and interconnects the rear latch mechanism and the front latch mechanism.
FIG. 5 is a schematic view on the front latch mechanism and shows a front end of the cable.
FIG. 6 is a detailed view on an exemplary embodiment of a rear latch mechanism as can be used in embodiments of the present invention. FIG. 6(a) shows a handle connected to a pulley and a cable connected to and/or wound on the pulley, the handle having a latch pin for engaging a rear engagement means, e.g. a rear strike plate mounted to or formed in a rear panel or a tailgate or a rear post. FIG. 6(b) shows the handle of FIG. 6(a) as seen from the left of FIG. 6(a).
FIG. 7 is a detailed view on an exemplary front latch mechanism (left part of FIG. 7) and the right part of FIG. 7 shows an exemplary pulley system as can be used in embodiments of the present invention.
FIG. 8 shows an example of a front latch operatively connected with a biasing means configured for biasing the front latch towards locking engagement.

In this document the terms "locking mechanism" and "latching mechanism" are used as synonyms.

The present invention relates in general to side walls 1 for a cargo area 2 of a vehicle, such as for example the side walls of the cargo area of a pickup truck or trailer, with an improved locking mechanism or latching mechanism.

The present invention also relates to a vehicle or trailer comprising a cargo area 2 with at least one such side wall 1, preferably two such side walls, one on the left side of the vehicle and one on the right side of the cargo area.

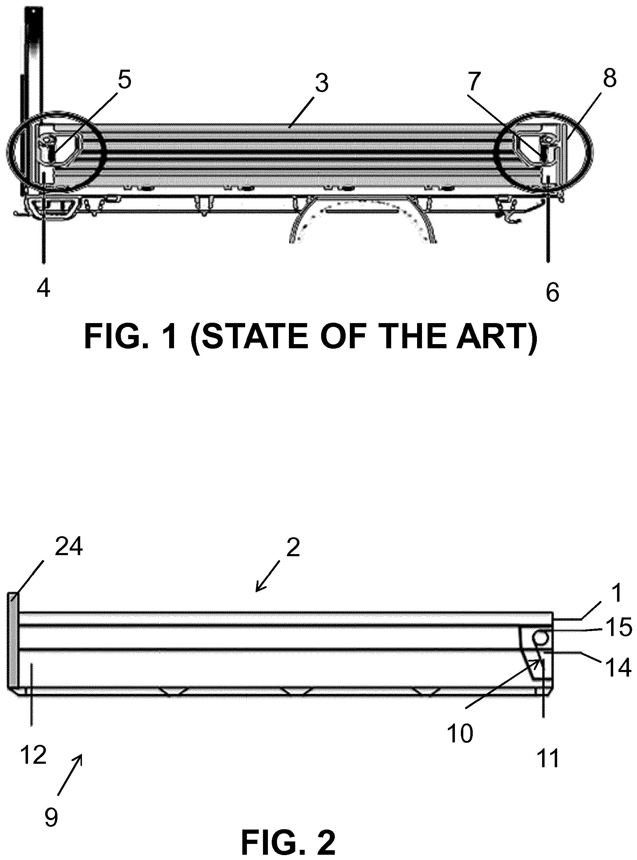

FIG. 1 shows a known side wall 3 of a cargo area of a vehicle, such as for example a pickup truck. The known side wall 3 has a front latch mechanism 4 comprising a front handle 5 for engaging a front latch with a front strike plate of the front panel or front post. The known side wall 3 further has a rear latch mechanism 6 comprising a rear handle 7 for engaging a rear latch with a rear strike plate of a rear panel or rear post or tailgate 8. The known front latch mechanism 4 and the known rear latch mechanism 6 function independently.

In order to open the known side walls 3, a user has to disengage both the front latch mechanism 4 by operating the front handle 5, and the rear latch mechanism 6 by operating the rear handle 7 separately. In addition, since the front handle 5 and the rear handle 7 are typically spaced apart over several meters, e.g. about 5 meters, the user has to move from the front to the rear of the cargo area or vice versa. This takes time and is inconvenient.

The present invention proposes a new side wall 1 having an improved latching mechanism 9 containing only a single handle 10. The improved latching mechanism 9 comprises a rear latch mechanism 11 comprising said single handle 10, and a front latch mechanism 12 without a handle, and a pulley system 13 functionally interconnecting the rear latch mechanism 11 and the front latch mechanism 12 such that both the front latch mechanism 12 and the rear latch mechanism 11 are operated by means of the single handle 10.

FIG. 2 shows an outside view of a side wall 1 with only one single handle 10 located at the rear end of the side wall 1, and preferably located on the outside of the side wall 1 when the latter is mounted on the cargo area 2. As can be seen, there is no second handle at the front end of the side wall 1.

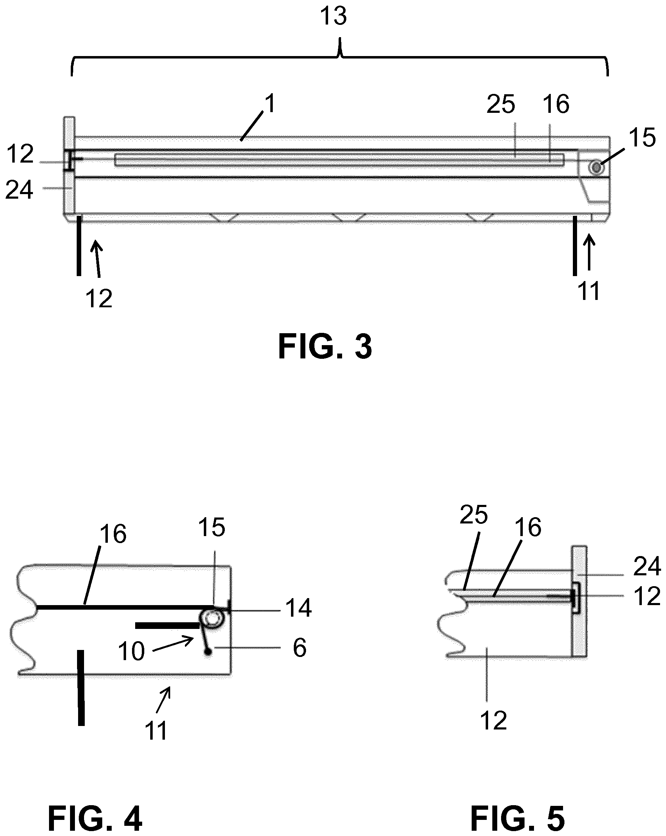

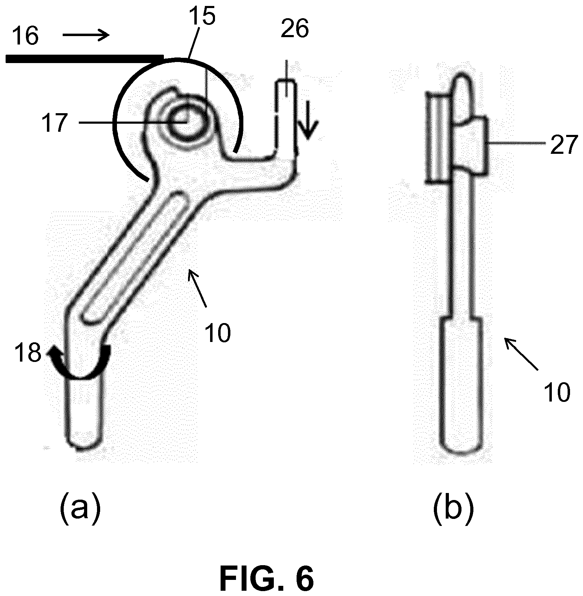

There is a front latch mechanism 12, but that is not visible in FIG. 2 because it is mainly built inside the side wall 1, as will be explained further below. The rear latch mechanism 11 cooperates with rear engagement means, e.g. in the form of a rear strike plate 14 (see FIG. 4) or a protrusion 27 (see FIG. 6b) to form a rear latch/striker mechanism for engaging/disengaging the rear end of the side wall, and also cooperates with a pulley system 13 for indirectly operating the front latch mechanism 12 for engaging/disengaging the front end of the side wall.

FIG. 3 and FIG. 6 and FIG. 7 show how the pulley system 13 works.

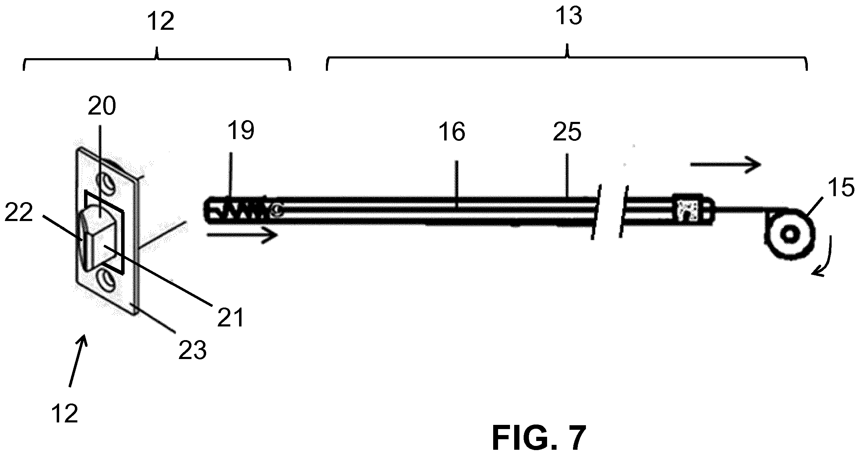

As can be seen in FIG. 7, the pulley system 13 comprises a pulley 15 and a cable 16. The cable 16 is preferably a steel cable.

As can be understood from FIG. 6(a), the pulley 15 is fixedly connected to the handle 10, or the handle 10 and the pulley 15 may form an integral part. The cable 16 is fixedly connected to or wound around the pulley 15, such that, when the handle 10 is rotated about the axis 17 in the direction indicated by arrow 18, the pulley 15 of FIG. 6(a) is rotated in clockwise direction and the cable 16 is pulled to the right of FIG. 6(a), i.e. to the rear end of the side wall 1.

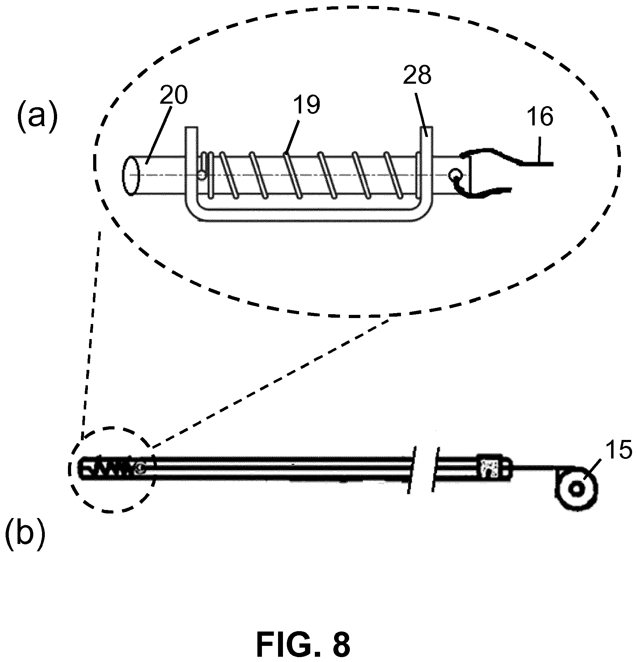

As can be understood from FIG. 3 and FIG. 7 and FIG. 8, when the pulley 15 rotates in clockwise direction, the cable 16 is pulled towards the right side of FIG. 3, against the spring force of a spring 19 (see FIG. 7 and FIG. 8), which spring 19 is configured for pulling or biasing the cable 16 towards the left of FIG. 3 and FIG. 7 and FIG. 8, i.e. towards the front end of the side wall 1.

Movement of the cable 16 will cause a front latch 20 (also referred to herein as "spring latch 20") to be moved in axial direction. As shown in FIG. 7, the front latch 20 typically is or comprises a cylindrical portion with a straight side 21 and a bevelled side 22, adapted for engaging with a front engagement means, e.g. with a front strike plate 23 which is typically mounted to a front panel or a front post 24 of the vehicle.

FIG. 3 further discloses an optional tubular housing 25 surrounding and thereby protecting the cable 16. FIG. 3 further shows (schematically) the front latch/strike mechanism 12, for example formed by the front latch 20 and the front strike plate 23 shown in FIG. 7.

FIG. 4 is a schematic view on the rear latch mechanism 11 comprising the handle 10 and also shows part of the pulley system 13 explained above, in particular the pulley 15 and part of the cable 16.

As shown in FIG. 6(a), the handle 10 preferably has a latch pin 26 adapted for engaging with a rear engagement means, e.g. with an opening in a rear strike plate 14 (see FIG. 4) or a protruding part 27 (see FIG. 6b), although such rear strike plate 14 or protruding part 27 is not part of the side wall itself, but is for example part of a rear post or of a tailgate (not explicitly shown).

FIG. 5 is a schematic view on the front latch mechanism 12 in latching engagement with a front panel or front post 24. The front latch 20 is connected to the cable 16 (for example in the manner shown in more detail in FIG. 8). The front latch mechanism 12 may be a latch/strike mechanism, an example of which is shown in FIG. 7 in more detail.

FIG. 6 is a detailed view on an exemplary embodiment of a rear latch/striker mechanism. Some parts of FIG. 6 were already discussed above.

FIG. 6(a) shows a handle 10 rotatable about an axis 17 and integrally formed with or fixedly connected to a pulley 15 which thus rotates along with the handle 10 when operated, and a cable 16 connected to and/or wound on the pulley 15, which will move in the direction of the indicated arrow when the handle 10 is rotated as indicated by arrow 18. The handle 10 of FIG. 6(a) has a latch pin 26 for engaging a rear engagement means, e.g. a rear strike plate 14 (see FIG. 4) or a protruding pin 27 (see FIG. 6b) which is typically part of a rear panel or a tailgate or a rear post (not shown).

FIG. 6(b) shows the handle 10 of FIG. 6(a) in locking engagement with such a protruding pin 27.

FIG. 7 (left part) shows an example of a front latch mechanism 12 comprising a spring latch 20, and a spring 19, and shows a front strike plate 23. The spring is configured for biasing the front latch 20 towards engagement with the front strike plate 23.

FIG. 7 (right part) shows the pulley system 13 comprising the pulley 15 and a cable 16 connected to or wound around the pulley 15.

If the rear latch mechanism 11 comprising the handle 10 with the latch pin 26 were added to FIG. 7, this drawing would show an example of an entire latching mechanism 9 as can be implemented in the side wall 1. The front strike plate 23 is shown in FIG. 7 because it cooperates with the front latch mechanism 12, but is not part of the side wall 1 itself.

FIG. 8(b) is a copy of the right part of FIG. 7.

FIG. 8(a) shows an example of how the spring 19 can be configured to bias the front latch 20 towards the front strike plate 23 (i.e. such that the front latch 20 is urged outwardly of the side wall). In the example shown, the spring 19 is fixedly connected at one end thereof to a cylindrical shape forming or connected to the front latch 20, and another end of the spring 19 rests against a fixed surface. In the example, the fixed surface is part of a U-shaped bracket 28 further comprising two openings for guiding the cylindrical shape 20 thereby allowing movement of the front latch 20 in longitudinal direction of the side wall 1. As can be seen, the cable 16 is also connected to the cylinder and is configured for pulling the cylinder and the front latch 20 towards the right in FIG. 8(a), i.e. towards the rear end of the cargo area, when the handle 10 is turned in the direction indicated by arrow 18 in FIG. 6(a), i.e. such that the pulley 15 is rotated in clockwise direction in FIG. 7 and in FIG. 8(b), thereby disengaging the front latch mechanism 12, but also disengaging the rear latch mechanism 11 (as can be appreciated from FIG. 6).

In the example shown, the spring 19 is a compressing spring, but the present invention is not limited to the specific biasing means shown in FIG. 8(a) and other suitable biasing means can also be used, for example a biasing means with a tension spring.

In the example of FIG. 8, the cable has or is connected to a hook, but of course other means of connecting the cable to the cylindrical object may also be used, for example by passing the cable through the opening and by clamping an outer end of the cable by means of screws (this technique is well known per se).

From the above, it can be understood that the side wall 1 has a latching mechanism 9 with a front latch mechanism 12 and with a rear latch mechanism 11, but only having a single handle 10 for operating both front and rear mechanism. This is far more convenient for the user than having to operate a first handle at the front of the cargo area, then move several meters, and then operate the second handle at the rear of the cargo area.

It is advantageous to locate the single handle near the rear of the cargo space rather than near the front, because the user will often have to open both side walls, and by locating the single handle of the left side wall and the single handle of the right side wall near the rear of the cargo space 2, the user will not have to walk around the entire vehicle.

While not explicitly shown, it is also possible to add a second spring mechanism, configured for biasing the rear latch mechanism 11 towards a locked position. The second spring could for example be connected to the handle 10 or to the pulley 15 and be configured for biasing the handle 10 to rotate in a direction opposite to the arrow 18 (see FIG. 6(a)). Such a second spring mechanism can help to keep the latch pin 26 engaged with the rear strike plate 14 (FIG. 4) or rear pin 27 (FIG. 6b) when driving, thereby reducing the risk that one or both side walls 1 would inadvertently open due to vibrations.

While the invention is illustrated and explained mainly for a left side wall, the skilled person will understand that the locking mechanism of a right side wall operates in much the same way as that of the left side wall, except that the handle of the right side wall would have to be rotated in counter-clockwise direction in order to disengage the front and rear latch mechanism.

In summary, the present invention discloses a side wall 1 for a cargo area 2 of a vehicle, the side wall 2 comprising a latch mechanism 9 comprising: a) a rear latch mechanism 11 comprising a rotatable handle 10 with a rear latch, e.g. in the form of a latch pin 26; b) a front latch mechanism 12 comprising a movable front latch 20, e.g. in the form of a spring latch with a straight side and a bevelled side; c) a pulley system 13 comprising a pulley 15 fixedly mounted to the handle 10, and a spring 19 connected to the front latch 20, and a cable 16 interconnecting the pulley 15 and the front latch 20; wherein the latch mechanism 9 is adapted for engaging and disengaging both the front latch 20 and the rear latch 26 upon rotation of the single handle 10.

### REFERENCE NUMERALS

- 1:: side wall,
- 2:: cargo area,
- 3:: (known) side wall,
- 4:: (known) front latch mechanism,
- 5:: (known) front handle,
- 6:: (known) rear latch mechanism,
- 7:: (known) rear handle,
- 8:: (known) tailgate,
- 9:: latching mechanism,
- 10:: single handle,
- 11:: rear latch mechanism,
- 12:: front latch mechanism,
- 13:: pulley system,
- 14:: rear strike plate,
- 15:: pulley,
- 16:: cable,
- 17:: rotation axis,
- 18:: disengaging movement,
- 19:: spring,
- 20:: front latch,
- 21:: straight side,
- 22:: bevelled side,
- 23:: front strike plate,
- 24:: front panel or front post,
- 25:: tubular housing,
- 26:: latch pin,
- 27:: rear protruding element,
- 28:: bracket

## Claims

1. A side wall (1) for a cargo area (2) of a vehicle, the side wall (2) comprising a latch mechanism (9) comprising:
- a single handle (10) rotatable about an axis (17);
- a rear latch mechanism (11) comprising a rear latch (26) configured for engaging with rear engagement means (27);
- a front latch mechanism (12) comprising a front latch (20) movable in a longitudinal direction of the side wall (1) and configured for engaging with front engagement means (23);
- a pulley system (13) comprising:
- a pulley (15) fixedly mounted to the handle (10);
- a spring (19) arranged for biasing the front latch (20) outwardly with respect to the side wall (1);
- a cable (16) interconnecting the pulley (15) and the front latch (20),
the latch mechanism (9) being adapted for engaging and disengaging both the front latch (20) and the rear latch (26) upon rotation of the handle (10); **characterised in that**
- the handle (10) is located at the rear end of the side wall (2);
- the rear latch mechanism (11) comprises the handle (10);
- the handle (10) comprises the rear latch (26).

2. The side wall (1) according to claim 1, further comprising a tubular housing (25) arranged for surrounding at least a portion of the cable (16).

3. The side wall (1) according to claim 1 or 2, wherein the rear latch (26) is a latch pin (26) and the rear engagement means is a rear strike plate (27) fixed to a rear panel or a tailgate (8) or a rear post.

4. The side wall (1) according to any of the previous claims, wherein the front engagement means is a front strike plate (23) fixed to a front panel or a front post (24).

5. The side wall (1) according to any of the previous claims, wherein the front latch (20) is a spring latch comprising a straight side (21) and a bevelled side (22).

6. The side wall (1) according to any of the previous claims, wherein the spring (19) is a compression spring.

7. The side wall (1) according to any of the previous claims, wherein the cable (16) is a steel cable.

8. The side wall (1) according to any of the previous claims, wherein the handle (10) is located on an outside of the cargo area (2).

9. A vehicle comprising:
- a cargo area (2) with at least one or at least two side walls (1) according to any of the previous claims;
- a front panel or front post (24) comprising said front engagement means, e.g. said front strike plate (23).

10. A trailer comprising a cargo area (2) with at least one or at least two side walls (1) according to any of the claims 1 to 8.

## Patentansprüche

1. Seitenwand (1) für eine Ladefläche (2) eines Fahrzeugs, wobei die Seitenwand (2) einen Verriegelungsmechanismus (9) umfasst, Folgendes umfassend:
- einen um eine Achse (17) drehbaren einzelnen Griff (10) ;
- einen hinteren Verriegelungsmechanismus (11), einen hinteren Riegel (26) umfassend, der dazu ausgelegt ist, in eine hintere Eingriffseinrichtung (27) einzugreifen;
- einen vorderen Verriegelungsmechanismus (12), einen vorderen Riegel (20) umfassend, der in Längsrichtung der Seitenwand (1) beweglich und dazu ausgelegt ist, in eine vordere Eingriffseinrichtung (23) einzugreifen;
- ein Riemenscheibensystem (13), Folgendes umfassend:
- eine am Griff (10) fest montierte Riemenscheibe (15);
- eine Feder (19), die zum in Bezug zur Seitenwand (1) nach außen Vorspannen des vorderen Riegels (20) angeordnet ist;
- ein Seil (16), das die Riemenscheibe (15) und den vorderen Riegel (20) miteinander verbindet,
- wobei der Verriegelungsmechanismus (9) dazu eingerichtet ist, bei der Drehung des Griffs (10) in den vorderen Riegel (20) und den hinteren Riegel (26) einzugreifen und zu lösen; **dadurch gekennzeichnet, dass**
- sich der Griff (10) am hinteren Ende der Seitenwand (2) befindet;
- der hintere Verriegelungsmechanismus (11) den Griff (10) umfasst;
- der Griff (10) den hinteren Riegel (26) umfasst.

2. Seitenwand (1) nach Anspruch 1, ferner ein rohrförmiges Gehäuse (25) umfassend, das zum Umgeben zumindest eines Teils des Seils (16) angeordnet ist.

3. Seitenwand (1) nach Anspruch 1 oder 2, wobei der hintere Riegel (26) ein Raststift (26) ist und die hintere Eingriffseinrichtung ein hinteres Schließblech (27) ist, das an einer Rückwand oder Heckklappe (8) oder hinteren Säule fixiert ist.

4. Seitenwand (1) nach einem der vorstehenden Ansprüche, wobei die vordere Eingriffseinrichtung ein vorderes Schließblech (23) ist, das an einer Stirnwand oder einer vorderen Säule (24) fixiert ist.

5. Seitenwand (1) nach einem der vorstehenden Ansprüche, wobei der vordere Riegel (20) eine Federklinke ist, die eine gerade Seite (21) und eine abgeschrägte Seite (22) umfasst.

6. Seitenwand (1) nach einem der vorstehenden Ansprüche, wobei die Feder (19) eine Druckfeder ist.

7. Seitenwand (1) nach einem der vorstehenden Ansprüche, wobei das Seil (16) ein Stahlseil ist.

8. Seitenwand (1) nach einem der vorstehenden Ansprüche, wobei sich der Griff (10) an einer Außenseite der Ladefläche (2) befindet.

9. Fahrzeug, Folgendes umfassend:
- eine Ladefläche (2) mit mindestens einer oder mindestens zwei Seitenwänden (1) nach einem der vorstehenden Ansprüche;
- eine Stirnwand oder eine vordere Säule (24), die eine vordere Eingriffseinrichtung, z. B. das vordere Schließblech (23), umfasst.

10. Anhänger, eine Ladefläche (2) mit mindestens einer oder mindestens zwei Seitenwänden (1) nach einem der Ansprüche 1 bis 8 umfassend.

## Revendications

1. Paroi latérale (1) pour une zone de chargement (2) d'un véhicule, la paroi latérale (2) comprenant un mécanisme de verrouillage (9) comprenant :
- une seule poignée (10) rotative autour d'un axe (17) ;
- un mécanisme de verrouillage arrière (11) comprenant un verrou arrière (26) configuré pour venir en prise avec un moyen de prise arrière (27) ;
- un mécanisme de verrouillage avant (12) comprenant un verrou avant (20) mobile dans une direction longitudinale de la paroi latérale (1) et configuré pour venir en prise avec un moyen de prise avant (23) ;
- un système de poulie (13) comprenant :
- une poulie (15) montée de manière fixe sur la poignée (10) ;
- un ressort (19) disposé de manière à solliciter le verrou avant (20) vers l'extérieur par rapport à la paroi latérale (1) ;
- un câble (16) interconnectant la poulie (15) et le verrou avant (20), le mécanisme de verrouillage (9) étant conçu pour mettre en prise et libérer à la fois le verrou avant (20) et le verrou arrière (26) lors de la rotation de la poignée (10) ;
**caractérisée en ce que**
- la poignée (10) est située à l'extrémité arrière de la paroi latérale (2) ;
- le mécanisme de verrouillage arrière (11) comprend la poignée (10) ;
- la poignée (10) comprend le verrou arrière (26).

2. Paroi latérale (1) selon la revendication 1, comprenant en outre un boîtier tubulaire (25) agencé pour entourer au moins une partie du câble (16).

3. Paroi latérale (1) selon la revendication 1 ou 2, dans laquelle le verrou arrière (26) est une goupille de verrouillage (26) et le moyen de prise arrière est une plaque de gâche arrière (27) fixée à un panneau arrière ou à un hayon (8) ou à un montant arrière.

4. Paroi latérale (1) selon l'une quelconque des revendications précédentes, dans laquelle le moyen de prise avant est une plaque de frappe avant (23) fixée à un panneau avant ou à un montant avant (24).

5. Paroi latérale (1) selon l'une quelconque des revendications précédentes, dans laquelle le verrou avant (20) est un verrou à ressort comprenant un côté droit (21) et un côté biseauté (22).

6. Paroi latérale (1) selon l'une quelconque des revendications précédentes, dans laquelle le ressort (19) est un ressort de compression.

7. Paroi latérale (1) selon l'une quelconque des revendications précédentes, dans laquelle le câble (16) est un câble en acier.

8. Paroi latérale (1) selon l'une quelconque des revendications précédentes, dans laquelle la poignée (10) est située sur un côté extérieur de la zone de chargement (2) .

9. Véhicule comprenant :
- une zone de chargement (2) avec au moins une ou au moins deux parois latérales (1) selon l'une quelconque des revendications précédentes ;
- un panneau avant ou un montant avant (24) comprenant ledit moyen de prise avant, par exemple ladite plaque de gâche avant (23).

10. Remorque comprenant une zone de chargement (2) avec au moins une ou au moins deux parois latérales (1) selon l'une quelconque des revendications 1 à 8.
